# EUROPEAN PATENT SPECIFICATION

(11) **EP 1 545 977 B1**
(45) Date of publication and mention of the grant of the patent: **23.01.2008**
(21) Application number: 03797802.0
(22) Date of filing: 01.07.2003
(51) Int. Cl.: B65B 7/16, B65B 41/18

(54) **APPARATUS FOR PACKAGING CONTACT LENSES**
VORRICHTUNG ZUR VERPACKUNG VON KONTAKTLINSEN
APPAREIL POUR METTRE SOUS EMBALLAGE DES LENTILLES DE CONTACT

(30) Priority: 02.07.2002 US 393187 P; 08.07.2002 US 394398 P
(43) Date of publication of application: 29.06.2005
(73) Proprietor: Johnson & Johnson Vision Care, Inc., Jacksonville, FL 32256 (US)
(72) Inventor: VOSS, Leslie A., Jacksonville, FL 32258 (US); DUNCAN, Gregory S., Gainesville, FL 32608 (US); SANKA, Ravi S., Jacksonville, FL 32256 (US); HALL, Gary S., Jacksonville, FL 32259 (US); WIDMAN, Michael F., Jacksonville, FL 32223 (US); SCHLAGEL, Mark E., Jacksonville, FL 32226 (US)
(74) Representative: Mercer, Christopher Paul
(86) International application number: PCT/US2003/020724
(87) International publication number: WO 2004/026691

(56) References cited:
- EP-A- 0 680 880
- EP-A- 0 741 078
- EP-A- 0 741 079
- WO-A-98/32587
- US-A- 3 140 573
- US-A- 3 861 983

## Description

### FIELD OF THE INVENTION

The present invention relates to an apparatus for heat sealing containers containing an ophthalmic contact lens to form a sealed package. More specifically, the present invention relates to an apparatus for heat sealing a lidstock to a lens container to form a package by controlling the application of heat and pressure for each lid and container assembly.

### BACKGROUND OF THE INVENTION

In the manufacture of hydrophilic ("soft") ophthalmic contact lenses, it is conventional to package each manufactured lens in a disposable package for containing a single lens and predetermined amount of liquid (generally buffered saline). Typically, the lens and liquid are introduced to a cavity or well in a container. The container is usually formed from a thermoplastic (e.g., molded polypropylene or polystyrene). After the lens and liquid are placed into the container, the container is sealed by applying a foil strip to the top of the container to form a lid and heat sealing the strip to the top of the container to form a package. The heat sealed package containing both the lens and liquid is then subjected to further processing, including for example, sterilization.

Conventional apparatus used for the high speed packaging of contact lenses on an assembly line is designed to permit inspection and packaging of several contact lenses simultaneously. Typically, a plurality (generally 6, 8 or 10) of containers are mounted in a fixed carrier rack having a cavity for receiving each container. A contact lens and liquid are introduced to each container mounted on the rack. The rack of containers is then conveyed to an inspection station where each container is inspected to ensure that a contact lens is present and not defective. The rack then moves onto a platen in a heat sealing station where a preformed sheet of foil stock is positioned over the rack of containers. A heated mandrel is then applied to the rack to apply predetermined heat and pressure for a predetermined time, thereby heat sealing the foil stock to each container and forming sealed packages. As a result, each of the containers is now each heat sealed to the sheet of foil stock and is accordingly joined together to form multi-package arrays. The foil stock is provided with perforations to permit the packages to be separated from each other after further downstream processing and/or shipping.

The packaging approach described above presents several disadvantages. For example, by providing a plurality of lens containers on each rack, the detection and identification of a defective or missing lens on the rack at the inspection station is complicated. A complex matrix tracking system must be employed to identify which container or containers on the rack has failed inspection and track them through the process until they can be removed.

Another problem inherent in processing multiple containers simultaneously in a fixed rack arrangement is that each container on the rack is subjected to identical heat sealing conditions. Due to variations in the molding process, the molded thermoplastic containers sometimes vary in height. In such an event, a container of non-standard height may be subjected to either too little pressure (if too short) or too much pressure (if too tall) compared to the pressure experienced by a container of standard height. As a result, the heat seal formed on one or more of the array of packages joined together by the perforated foil sheet may be of unacceptable quality. One defective heat seal in the array will require that the entire array of packages be discarded, and, thus, an entire production lot may be subject to further testing for heat seal failures, which, if present, may require rejecting the entire production lot.

Finally, in the prior art heat sealing apparatus, the sheet of perforated foil stock is positioned over the rack of containers upstream of the heated mandrel station. This arrangement relies on gravity and friction to maintain the lidstock in position until the heat seal is formed. Slight lateral movement of the foil stock causes mis-registration of the stock on the set of containers and could result in a defective set of packages.

The apparatus described above is disclosed in U.S. Patent No. 5,687,541 issued to Martin et al. Other packages and packaging apparatus systems are disclosed in U.S. Patent 5,649,410 issued to Martin et al., U.S. Patent 5,561,970 issued to Edie et al., U.S. Patent 5,094,609 issued to Kindt-Larsen, U.S. Patent 4,691,820 issued to Martinez, U.S. Patent 5,620,087 issued to Martin et al., U.S. Patent 5,749,20 issued to Edwards et al. U.S. Patent 5,577,367 issued to Abrams et al. and in EP 0 741 079, the disclosure of which form the basis for the preambles of claims 1 and 6 appended hereto. In the event of conflict in the meaning or interpretation of the present specification and/or appended claims, the present specification controls.

It will be apparent that there continues to be a need for an apparatus capable of detecting and selectively removing failed containers. In addition, the need exists for a heat sealing apparatus capable of applying a predetermined amount of pressure to each container in a group of containers being sealed simultaneously. Finally, there is a need for a heat sealing apparatus that is capable of maintaining a sheet of lidstock in registration with the set of containers during heat sealing. There is also a need for a sealing apparatus that is sensitive to angular irregularities in container heights, and discrepancies in the planes of the platen and the surfaces of the heat seal dies, and one that can provide for more consistent heating of the heat seal dies. The present invention addresses these needs.

### SUMMARY OF THE INVENTION

The present invention relates to an apparatus for packaging contact lenses as defined in claim 1 or claim 6. The apparatus includes a plurality of discrete lens carriers and a plurality of contact lens containers. The carriers are movable within the apparatus. A single one of the containers is mounted on a single one of the carriers.

According to the present invention, the apparatus for automatically packaging contact lenses includes a plurality of lens carriers, a plurality of lifts, a plurality of contact lens containers and either a plurality of platens and/or a plurality of mandrels. One of the containers is mounted on a respective one of the carriers. Each of the platens and/or each of the mandrels is individually supported by one of the lifts. The lifts apply pressure, within a predetermined range, to each of the containers.

The mandrel is moveable between a retracted position above the plurality of containers and an engaged position immediately adjacent to the plurality of containers. A lidstock is selectively movable between a retracted position and an inserted position. The inserted position is between the heated mandrel and the plurality of containers, whereby in the inserted position the lidstock is fixedly held in position at least until the heated mandrel contacts the lidstock while moving to the engaged position.

The lidstock may have indicia printed thereon. Such a lidstock may be fed from a roll under tension. A vision alignment inspection system checks the print quality on the lidstock and simultaneously checks for registration of the lidstock within the apparatus.

The apparatus may be for packaging ophthalmic hydrophilic contact lenses transported along a conveyor, each lens contained within a container supported by a carrier. The apparatus may include a conveyor for conveying carriers each supporting a container, each container including a well for containing a contact lens and preferably a heat sealing surface. The apparatus also includes a plurality of platens, each of the platens attached to a lift capable of independently exerting a preset pressure against the mandrel (and the container between the platen and mandrel). Each platen receives a single carrier. Preferably there is one transducer, which generates an electrical signal corresponding to the pressure that operates on the cylinders to assure that it is within prescribed limits. A heated mandrel is disposed above the platens. The mandrel is movable from a disengaged position to an engaged position. A lidstock inserter capable of inserting a lidstock between the mandrel in the disengaged position and the heat sealing surfaces of the containers positioned above the plurality of platens is provided. The inserter preferably holds the lidstock in place until the mandrel contacts the lidstock against the container. In addition, a signal processor is provided, capable of receiving the pressure signal from the transducer, comparing the signal to a set of predetermined values, and marking the array for rejection if the pressure exerted by the lift is outside the predetermined range.

### BRIEF DESCRIPTION OF THE DRAWINGS

The above and still further objects, features and advantages of the present invention will become apparent upon consideration of the following detailed description of a specific embodiment thereof, especially when taken in conjunction with the accompanying drawings wherein like reference numerals in the various figures are utilized to designate like components, and wherein:
Figure 1 is a side elevation view of the heat sealing apparatus according to the present invention;
Figure 2 is a front elevation view of the heat sealing apparatus illustrated in Figure 1;
Figure 3 is a perspective view of a contact lens container;
Figure 4 is a perspective view of a contact lens carrier with a contact lens container received thereon;
Figure 5 is a side view of another embodiment of the present invention;
Figure 6 is a schematic diagram of the pneumatic system of the preferred heat sealing apparatus; and
Figure 7 is a side view of the movement of the lidstock prior to the heat seal apparatus.
Figure 8 is a front view of another embodiment of the invention.
Figure 9 is a cross-sectional view of the embodiment shown in Figure 8 taken along the line c-c shown in Figure 8.
Figure 10 is a partial side perspective view of a compliant head useful in the embodiment of this invention shown in Figures 8 and 9.
Figure 11 is a side view of the compliant head shown in Figure 10.
Figure 12 is a side view of a portion of the compliant head.
Figure 13 is a partial cross-sectional view of a portion of the compliant head.
Figure 14 is a side perspective view of a heat seal die block useful in this invention.

### DETAILED DESCRIPTION OF THE PREFERRED EMBODIMENTS

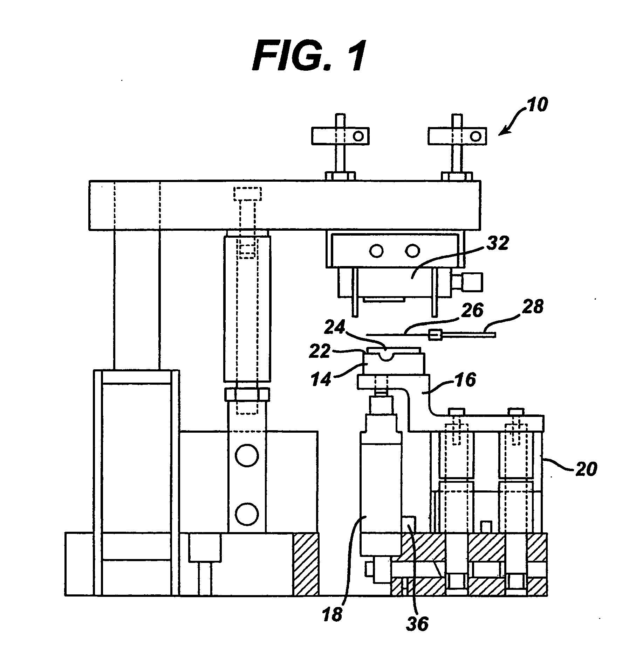

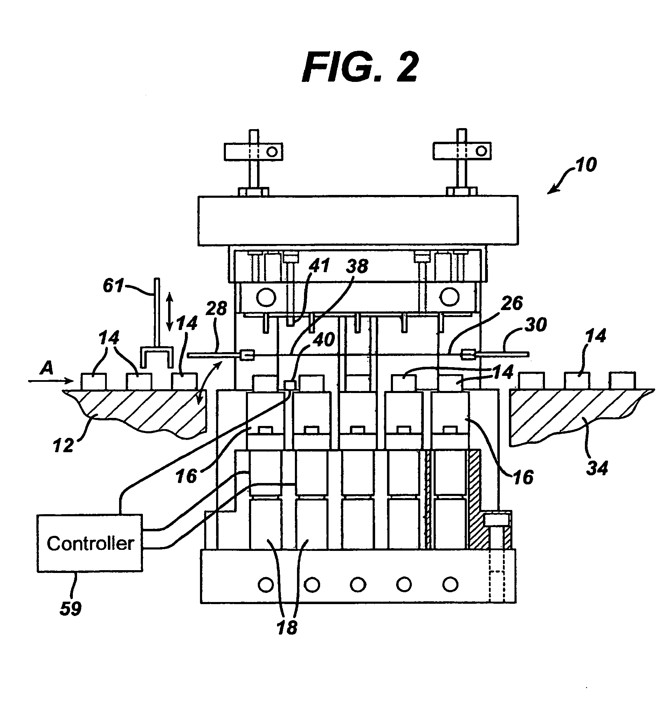

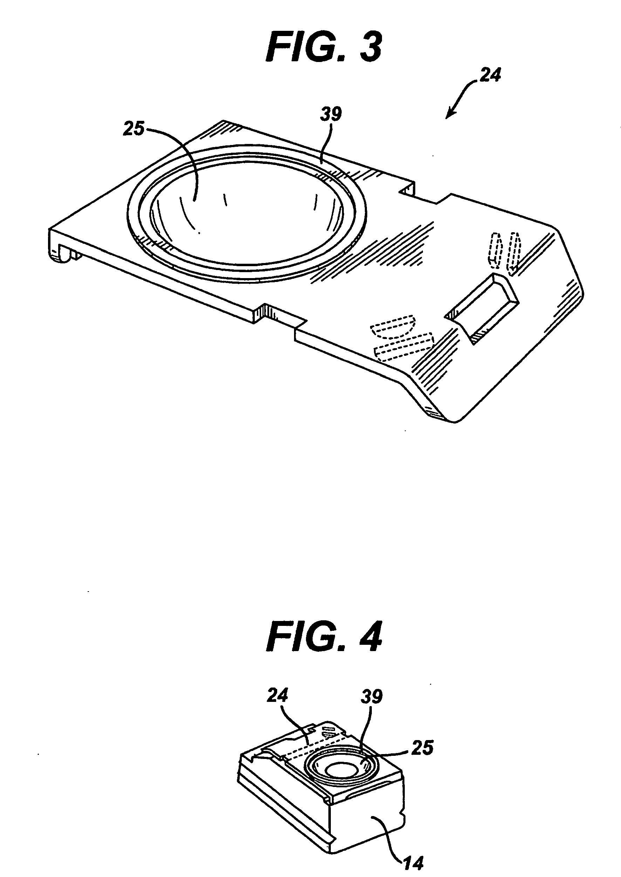

Referring now to Figures 1 and 2, side and front elevation views of a heat seal apparatus 10 for sealing a lidstock onto a container to form a sealed contact lens package are illustrated. The apparatus includes an upstream conveyor 12 capable of conveying a plurality of individual lens carriers 14 (FIG. 4), in the direction indicated by arrow A in Figure 2, into the heat seal apparatus 10.

As illustrated in Figure 2, in the heat seal apparatus 10, each individual carrier 14 is positioned above a discrete support platen 16. Each platen 16 is supported by a lift, e.g., a hydraulic or pneumatic (i.e., fluid) cylinder 18 which is operative to vertically displace the respective platen and by a bearing block 20.

Each individual lens carrier 14 supports, on its upper surface 22, a lens container 24, which contains a contact lens in a cup-shaped recess or well 25. The containers can be a portion of the mold, e.g., the front cure mold and/or the bottom half of a contact lens package, which is conventionally referred to as the bowl. preferably, the container is a bowl. Referring now to Figure 3, container 24 includes a sealing flange 39, which is disposed about cup-shaped recess 25. The individual lens carriers 14 are incrementally moved into position in the heat sealing assembly such that one lens carrier 14 is placed upon each of the platens 16. As illustrated in Figure 2, the heat seal assembly includes, in one illustrative embodiment, five platens which each receive a single lens carrier holding a container. However, in the currently preferred exemplary embodiment, the heat seal assembly includes six platens. Once the set of lens carriers are in position, with each carrier supporting a container 24 thereupon, a lidstock sheet 26 is moved into position between a heated mandrel 32 of the heat seal apparatus and the containers 24. Lidstock 26 is preferably in the form of a foil lid stock, which is preferably pre-perforated in a conventional manner at a location corresponding to a location between each individual lens carrier 14. The foil sheet is typically a laminate of aluminum foil and a thermoplastic film, such as a polyethylene. Lidstock 26 is preferably held by a foil maneuvering mechanism which includes a pair of gripping fingers 28, 30. The fingers selectively move lidstock 26 from a retracted position (not shown) to the inserted position (see Figures 1 and 2). Preferably, the lidstock is held in position over the containers at least until the heated mandrel contacts the lidstock to the surface of the container at which time the fingers let go of the lidstock and return to the retracted position. In another embodiment, the fingers can hold the lidstock in place until the heat sealing step is complete. The heated mandrel 32 is selectively movable from an upper, non-engaging position, as illustrated in Figures 1 and 2, to a lower engaged position, thereby applying heat and pressure to a predetermined portion of the lidstock 26 positioned over the container for a predetermined time to create a heat seal and form a sealed package. More specifically, lidstock 26 is heat sealed to the annular flanges 39 of each of the respective containers 24. Thereafter, the heated mandrel 32 is raised back up to the upper, non-engaging position. The individual lens carriers 14, which each now carry a sealed package (i.e., a container 24 heat sealed to foil lidstock 26) joined by the foil sheet to the adjoining packages to form a set of packages, are next advanced to a downstream conveyor 34 for further processing, in a manner which is known to those skilled in the art. In the preferred mode, six (6) containers are sealed in each step, with two lidstock strips covering three packages each.

Each cylinder 18 is in fluid communication with one or more pressure transducers 36 to measure the pressure that is applied by the heated mandrel 32 against the container when mandrel 32 is moved to the lower, engaged position. The heat seal apparatus 10 further includes a controller 59 electrically connected to the one or more pressure transducers and to the individual cylinders, and is programmed with the acceptable predetermined range for the pressures to be exerted in forming the heat seal. The controller preferably comprises a processor or computer programmed to receive the electrical signals from the one or more pressure transducers, determines the pressure applied to the respective packages 24, and, if necessary, controls one or more of the cylinders 18 to increase or decrease the pressure applied to that container. Preferably, the pressure applied by the heated mandrel 32 against the containers 24 is within the predetermined range. The range can be determined by those skilled in the art depending on the material used for package 24, lidstock 26 and their respective thickness to ensure that a proper seal is achieved. Because of the tolerances in the thickness of the sealing flange 39 on the container 24 and the thickness of the lidstock 26, by applying the heated mandrel to an individually supported lens carrier at a pressure maintained within the predetermined range, the present invention ensures that the proper pressure is applied to each container so that lidstock 26 is properly sealed to container 24 in the set. Thus, in the event one of the pressure transducers senses a pressure out of the predetermined range, the corresponding cylinder is controlled to either rise or descend to increase or decrease respectively, the pressure applied to that container to ensure a proper heat seal.

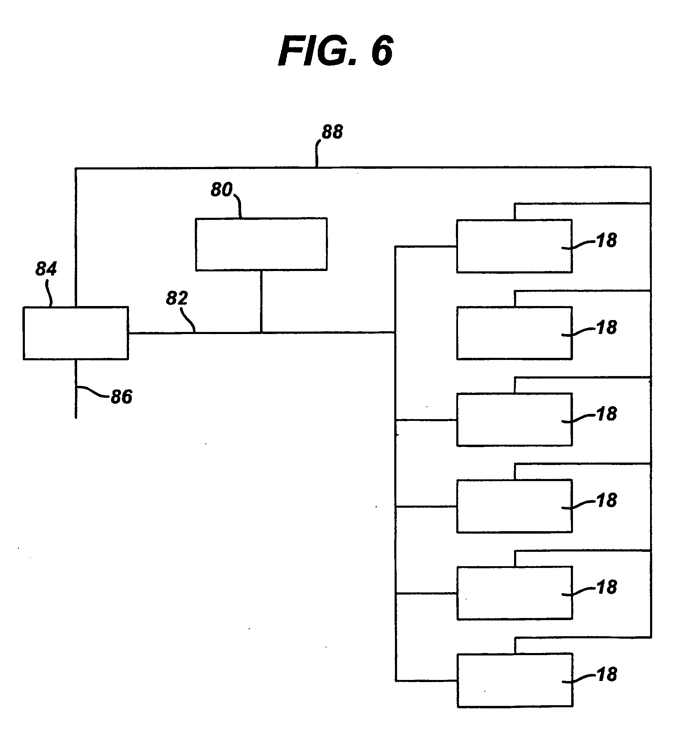

Referring now to Figure 6, in a currently preferred exemplary embodiment, one pressure transducer 80 is used to measure the pressure that is applied to each cylinder or lift 18. Each cylinder 18 is adjustable between an up position and a down position dependent upon the position of a three-way valve 84. Three-way valve 84 receives fluid pressure from a conventional source (not shown) via source conduit 86. Valve 84 connects fluid line 86 with either cylinder up conduit line 82 or with cylinder down conduit line 88. It is noted that the pressure transducer 80 is tapped into pressure line 82 to determine the pressure applied by all cylinders 18 when they are in the up position. An alarm (not shown) is activated if the detected pressure is not within a predetermined range. If the alarm is activated the array of packages, which were in the heat sealer, are tracked for discard by the control system.

Lidstock 26 can be provided with a lid registration mark 38, which can be sensed by an optical sensor assembly within the heat cylinder assembly to ensure that the lidstock 26 is properly positioned within the heat seal assembly. Registration mark 38 can be an aperture or transparent portion of the lidstock, such that an optical signal from an optical transmitter 41 of the sensor assembly is received by an optical detector 40 only when the aperture is aligned with the optical signal path defined between the transmitter and receiver. In place of the optical sensor assembly within the heat seal apparatus 10, registration of the lidstock may be done elsewhere, and the gripping arms 28 and 30 of the lidstock maneuvering mechanism may be arranged to reliably maneuver the lidstock to a predetermined location in proper registration with the platen 16 and, thus, with the carriers 14. Because the lidstock is preferably held during the heat seal step the alignment preferably does not need to be checked after sealing.

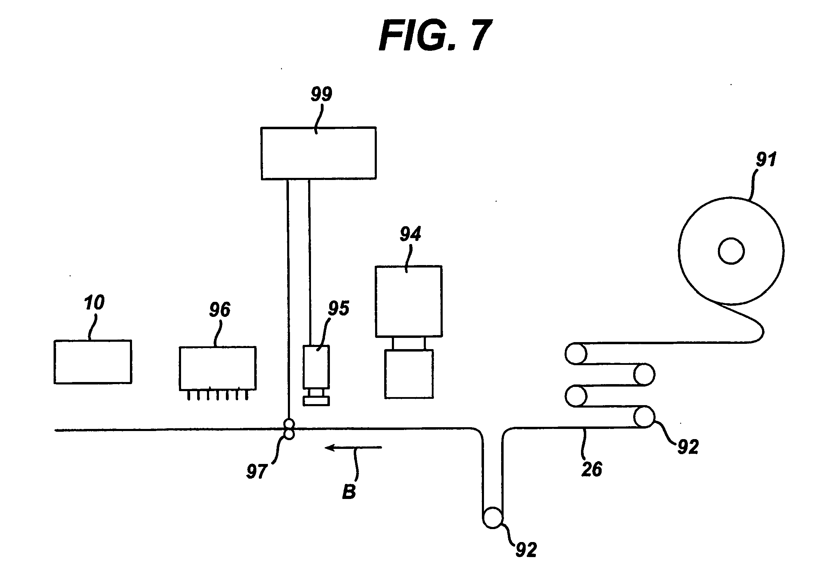

In the preferred embodiment, in the steps before the lidstock is placed over the containers in the heat seal apparatus, the lidstock (which preferably has most of the graphics pre-printed on it) has some variable product information printed on it, e.g., the power, lot and expiration date of the product and the lidstock is cut and perforated into strips according to the number of containers to be heat-sealed into an array. The printing on the lidstock can be done by any known method, including laser printing or thermal printing, preferably by laser printing. The preprinted graphics on the lidstock preferably provide areas in which this information is to be printed, e.g., blank colored boxes. In the preferred embodiment, shown in Fig. 7, a strip of lidstock 26 is fed off a roll 91 under constant tension through lidstock buffers 92 in the direction shown by arrow B to the printing system 94, and to the cutting or cutting and perforation system 96 which are located in a line. Preferably, between these two operations is located a vision system 95 which uses a portion of the graphics on the lidstock 26 to check the registration of the lidstock. If, when the strip of lidstock 26 is fed into the printing system 94 and cutting and perforation system 96, the portion of the graphics is not in its proper location, the vision system 95 communicates to the control system 99 for the process that the lidstock is not in the correct location and the control system 99 instructs the lidstock feed rollers 97 to adjust the position of the lidstock either in the plus or minus direction. By the use of the vision system 95 the lidstock 26 is continuously checked and automatically realigned. The vision system 95 can be located before and/or after the printing system 94, and/or within the cutting and perforation system 96, and/or in the heat-seal apparatus 10. However, in the preferred embodiment, there is only one vision system 95, e.g., an optical character verification system with location capability, and it checks the laser printing quality at the same time it checks the registration; therefore, it is preferably located after the printing system 94. By locating the printing system 94 and the cutting and perforation system 96 in a line in which the lidstock 26 is taut between them and under constant tension, the registration of the lidstock 26 by the vision system 95 maintains registration in both systems. Further, in the preferred embodiment, by carefully controlling the lidstock 26 during the cutting and printing steps and by holding the lidstock until the mandrel 32 contacts the lidstock 26 in the heat-sealing apparatus 10, checking the registration of the lidstock within or after the heat-sealing apparatus 10 is not necessary, and in the preferred embodiment is not done.

Further, in the upstream conveyor 12, a conventional inspection system may be used to ensure that a proper or non-defective lens has been placed within each container 24. In the preferred embodiment, the detection system described in commonly assigned U.S. Patent Application Serial No. 09/187,579 filed November 5, 1998, entitled "Missing Lens Detection System and Method", VTN-423, the disclosure of which is hereby fully incorporated by reference, is upstream of the heat seal apparatus. If either a conventional inspection system or the preferred detection system is used, if an improper or defective lens has been placed within container 24, or, for example, if no lens has been placed within container 24, the carrier 14 supporting the container can be removed from the assembly line (i.e., from conveyor 12) downstream of the inspection station by a discarder arm 61 or the like, which is preferably controlled by the computer for the process acting on information from the detection system or inspection system. An acceptable lens-containing container on a carrier can then be automatically moved into the empty position left by the removed carrier before the individual lens carriers 14 are moved into position before or in the heat seal assembly 10. A device for automatically inspecting contact lenses is described in U.S. Patent No. 5,687,541 to Martin et al., incorporated herein by reference.

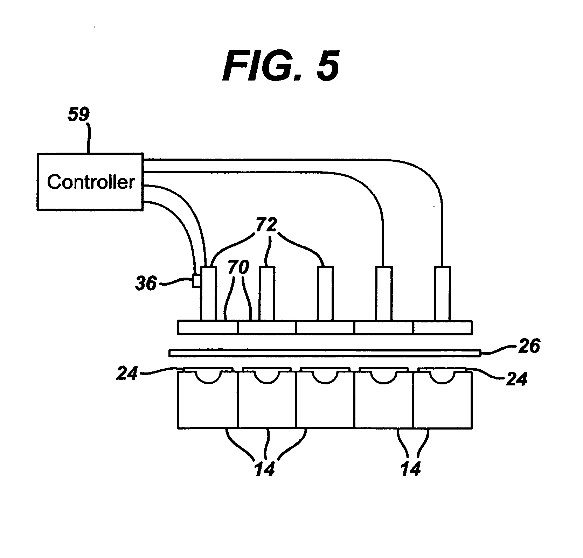

In another embodiment, the heated mandrel 32 may comprise plural individually actuated dies 70 (Fig. 5) controlled by individual die cylinders 72, each of which individually applies pressure to portions of the lidstock 26 and to a corresponding one of the containers 24 housed in the carriers 14. In this embodiment, the cylinders 18 engaged to the corresponding platens 16 are replaced by the die cylinders 72, and the platen 16 may be a conventional, single base supporting all of the carriers or a single carrier holding multiple containers to be heat sealed. The pressure in the die cylinders can be monitored by one or more pressure transducers 36 as described above in connection with Fig. 2 or Fig. 6 and the controller 59 can be responsive to receipt of electrical signals from the respective transducers to control the individual die cylinders 72 to maintain the pressure applied to each of the packages within the predetermined range, or if the pressure is outside a set range the arrays can be tracked for discard. Again, it is preferable to hold the lidstock in place over the containers until the mandrel is moved to the engaging position causing the lidstock to contact the containers.

In another aspect of the invention, there is provided an embodiment that allows for variances in the heat seal area of a package by providing means that allow the heat seal apparatus to be flexible to the pitch or yaw in the plastic in the heat seal area.

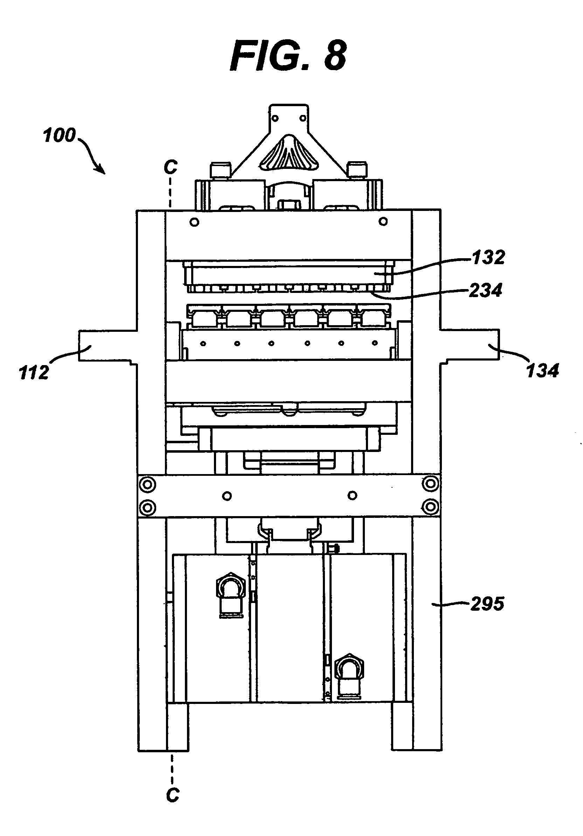

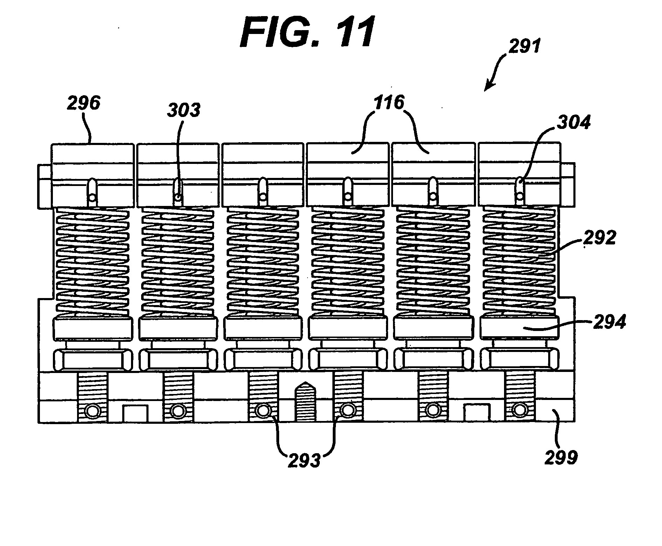

In the embodiments of the invention described earlier, the heat seal apparatus positions the carriers carrying the containers under the mandrel. The mandrel preferably comprises one or more heat seal dies that are mounted on the heat sealing apparatus and are used to seal the lidstock to one or more containers. The containers are located under the mandrel so that each container is aligned with a corresponding heat seal die. In the embodiments previously described, sometimes it is difficult to maintain the surface of the heat seal die and the surface of the platen onto which the carrier is mounted exactly parallel to each other which will negatively impact the sealing of the lidstock to the container. The embodiment shown in Figures 8-13 provides a heat seal apparatus comprising one or more compliant heads. The heat seal apparatus 100 comprises an upper portion 330 and a lower portion 290. The upper portion comprises a heated mandrel 132. The lower portion comprises a compliant head 291 comprising a platen 116, that allows each platen 116 (and therefore the container on each platen) to move limited distances preferably in the horizontal, vertical, pitch and yaw directions so that the surface 233 of the heat seal die 234 that contacts the lidstock on each container and the surface 296 of each platen that carries each container are parallel to one another. This provides for the most consistent and reliable sealing of the lidstock to the container.

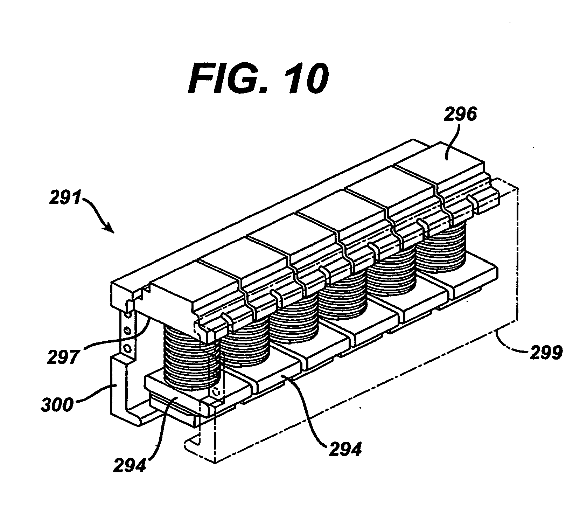

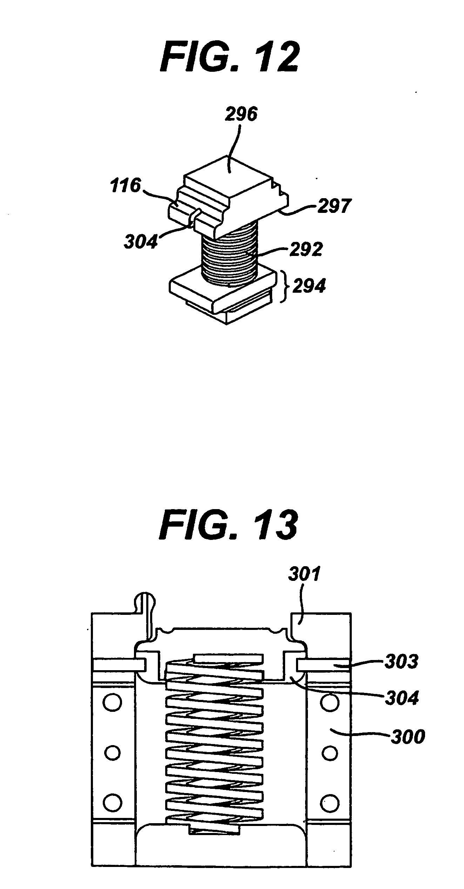

Each compliant head 291, shown individually in Figure 12, comprises a platen 116 and movement means that provides for the movement of the platen during use so that the surface of the platen and the surface of the sealing die are aligned and preferably parallel to one another. The movement means as shown in Figures 10, 11, 12 and 13 is a spring 292 one end of which is preferably attached to the platen 116, preferably at the surface 297 of the platen 116 opposite the carrier contacting surface 296 of the platen 116. The spring can be attached to the platen (and/or the platform) via a boss in the inside diameter at the ends of the springs, or by welding, fasteners, or any way known to a persons of ordinary skill in the art. Alternative means that provides movement of the platen could be a shock, e.g. gas shock, and a ball bearing to support the platen. The compliant head 291 preferably also comprises a platform 294 to which the other end of the spring 292 is attached. Each compliant head 291 is preferably constructed as a separate part so that if a compliant head wears or is defective it can easily be removed from the lower portion of the sealing apparatus 290 and replaced.

Each compliant head 291 is attached to a support 299 via a screw 293. Preferably screw 293 is a fine threaded adjustment screw that is preferably also used to pre-load the spring that is to compress the spring. The compliant head is calibrated such that for a given compression distance (preferably 2 mm,) the desired force is achieved (preferably 400 -500 lbs depending upon the shape of the package.) The spring 292 must be designed so that it is in its elastic range within the required deflection. This will typically yield millions of cycles before failure.

The compliant head 291 preferably further comprises means to hold the spring in a compressed state. The means to maintain the spring in a compressed state comprises upper lips 301 that are attached to side supports 300. The side supports are located on opposite sides of each compliant head 291 and attached to support 291. The lips 301 constrain the platens 116 and define the maximum vertical position of the platens (the compliant head), and with the support 299 are means to maintain the spring under constant compression. When the compliant head is mounted onto the support and between the side supports, preferably the spring is under a compression force.

In the preferred embodiment as shown in more detail in Figure 13, in addition to the movement of the platen by the vertical compression of the spring, movement of the platen can be any direction; however additional means to limit this movement are preferably provided. In the preferred embodiment, as shown in Figure 13, the means to limit the movement are the lips 301, and one or more pins 303 that are attached to or are part of side supports 300 that are received into one or more slots 304 in each platen 116,. As shown each side support 300 has a pin 303 for each platen 116, and each platen 116 has two slots 304 on opposite sides to receive the pins 303. The pins 303 and slots 304 are sized to allow the platens to tip back and forth, and to pivot left and right. In use when the platen of the compliant head carrying a container is in pressurized contact with a lidstock and the surface 233 of the heat seal die 234, the platen and therefore the container and lidstock conform to the plane of the surface 233 of the heat seal die 234. As shown the platen 116 and the contacting surface 233 of the heat seal dies 234 can be up to 0.3mm from parallel prior to contact, and when in contact the compliant head will allow the platen to move in an angular direction to provide for planar alignment of surfaces 296 and 233during the process of heat seal.

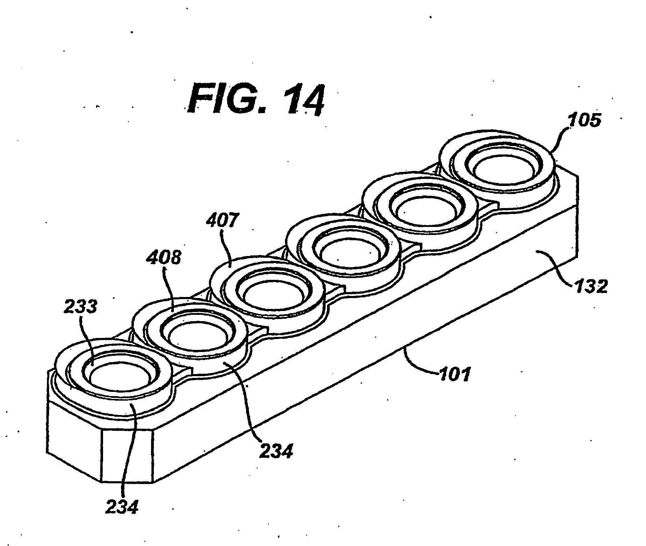

The preferred mandrel is a heat seal die block 101 as shown in Figure 14. The heat seal die block 101 comprises heat seal dies 234 that comprise a raised area 105 the surface 233 of which when in use, contacts, heats, and presses the lidstock against and into the sealing flange 39 which is preferably a raised area on the surface of the container 24. As shown in Figure 14, the raised circular area 105 is useful to adhere lidstock 26 to a round sealing flange 39, similar to the one shown in Figure 3.

When the compliant heads are assembled, it is preferred that the springs are used within their working elastic region and the springs can be designed to be repeatable in force for a given distance. When in use, the platen will be compressed a known distance; therefore, the screw can be used to adjust the preload on the spring until the force requirement is met. Each spring is calibrated in this way to provide the same compression force and provide for repeatable deflection.

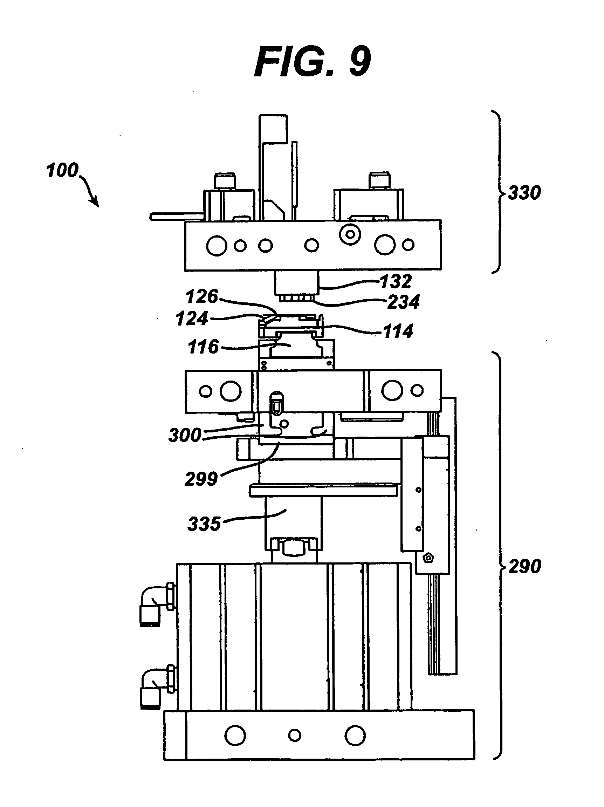

In the preferred embodiment shown in Figures 8 and 9, the lower portion 290 comprises the means to move the upper portion and the compliant head into contact with the container between the platen and the heat seal dies 234. In an alternative embodiment the upper portion could be provided with means to move the upper portion into contact with the lower portion. As shown, the means are a single lift 335 that operates on the support 299 to move all six compliant heads mounted on the support upwards into contact with the mandrel 132 of the upper portion 330. The lift 335, e.g., a hydraulic or pneumatic (i.e., fluid) cylinder preferably a pneumatic cylinder, more preferably an air cylinder, most preferably an air cylinder having a large bore. The upper portion is attached to stationary frame 295. The lower portion 290 is also attached to the same frame 295. The compliant head is movably attached via the lift 335 to the frame 295. The compliant head moves vertically when moved by the lift 335. The lift is attached to the compliant head by bolting the lift to the support 299.

In operation, the compliant head carrying the containers is moved by the lift into contact with the mandrel. Preferably the compliant head is overdriven to a dead stop at a point that will force the springs to be compressed a required distance, approximately 1-2 mm. In this way minor fluctuations in the lift's pressure will not detrimentally impact the seal of the lidstock to the container. Therefore, if the lift is brought to a stop short of the lift's driving limit, the springs in the compliance head are compressed the required distance against the manifold, and any force in excess of that required by the springs would be absorbed by the dead stop. In this way we have a finely controlled and calibrated force (the springs) and a main driving force which is very robust (the lift, a cylinder) which drives the calibrated force to its calibrated position. At the point at which the springs are compressed, the compliant heads can each adjust themselves horizontally, vertically and in the pitch and yaw directions to be parallel to the mandrel. In this way the plane of the container and the plane of the heat seal die will be parallel or differ by less than 2 degrees from parallel.

This embodiment is an improvement over the other embodiments, because it provides individual compliance in multiple directions, vertically, horizontally, and angularly in the pitch and yaw directions. Another benefit is that maintenance is simplified by decreasing the number of lifts or air cylinders, which sometimes have failure of seals or variances in airline pressure. However, the compliant heads of this invention can be used in the previously described embodiments having multiple lifts to provide additional compliance to those embodiments. The compliant heads described and shown herein could be attached to individual lifts, instead of to a support and a single lift as described above.

Further, the compliant head could be used as the mandrel with individual heat seal dies attached to each compliant head instead of individual platens as described and shown above. Either the upper or lower portions or both portions of the heat sealing apparatus could be moved by one or more lifts (and individual lifts for each heat seal die, if desired) as described above to overdrive the springs in the compliant head to provide proper alignment of the heat seal dies and the platens (containers).

In this embodiment it is preferred to use high-pressure to yield much faster seal times, improved seal integrity, and minimal skinning (a negative condition apparent when opening a primary package leaving the plastic substrate of the foil attached to some extent on the primary package. The force is preferably greater than 350 lbs.

Another aspect of this invention is the provision of an improved heat seal die that provides improved thermal characteristics. The heat seal die of this invention maintains its temperature very close to the temperature necessary to heat-seal the lidstock to the container at all times, even just after a heat-sealing step. In the preferred embodiment this temperature is approximately 200-240°C. in earlier embodiments, there was a lag time of greater than 3 seconds between sealing packages to provide time for the heat seal die to heat up to a temperature necessary for heat-sealing. To attempt to decrease the lag time, more conductive materials were used for the heat seal die; however, the conductive materials are expensive and easily damaged.

In this invention, an advanced wafer heater that has very high wattage (developed and marketed by Tayco Engineering for use in the aerospace industry) is used to heat the heat seal dies. By using direct application of the wattage needed to seal the package rather than the thermal momentum of the die, the heat seal dies are maintained at the necessary temperature, and the lag time for the heater to increase the temperature of the heat seal die is decreased significantly to less than 1 second. Additionally, because the heater is so efficient, it allows for the use of a heat seal die material that is best suited for a manufacturing environment, that is stainless steel, more preferably hardened stainless steel. The stainless steel die is very durable.

The improved heater also overcomes the negative impact that energy wicking has on the heat seal when the lidstock that is heat sealed comprises a foil layer. When the shape of the lidstock having a foil layer is not equal on all sides surrounding the shape of the heat seal die there is uneven wicking away of heat from the heat seal die by the lidstock. More energy is wicked away where there is more foil, causing the resulting seal of the lidstock to the container to be "lighter" where substantial heat was wicked away. Prior to this invention to compensate for this, the package has been sealed to provide sufficient seal on the side with more foil which has resulted in over-sealing the side with less foil. This has caused problems with skinning and other difficulties when opening packages.

To overcome this problem, the heat seal dies can be modified to even out the energy by providing an extra thermal mass to the heat seal die in the areas of the heat seal die that will contact the lidstock where there is a greater amount of foil to wick the heat away from the heat seal die. To determine how much mass to provide to the heat seal die, the efficiency of the heater (any heater), and the amount of foil (available to wick heat away from the heat seal die) around the area of the lidstock that the heat seal die will contact, and the thermal conductivity of the heat seal die material and foil must be considered. Figure 14 shows the thermal mass 407 useful for providing more energy from the heater (not shown) into the side 408 of the heat seal die 234 that contacts the lidstock with a bigger area of foil available to wick the energy from the heat seal die which results in an even seal of the lidstock to the container.

Having described the presently preferred exemplary embodiments of an apparatus for automatically packaging contact lenses in accordance with the present invention, and related inventions, it is believed that other modifications, variations and changes will be suggested to those skilled in the art in view of the teachings set forth herein. It is, therefore, to be understood that all such modifications, variations, and changes are believed to fall within the scope of the present invention as defined by the appended claims.

## Claims

1. An apparatus for packaging contact lenses in a plurality of contact lens containers (24), each container (24) having a recess (25), a sealing flange (39) about said recess (25), and a contact lens within said recess (25), a plurality of said containers (24) being sealed in said apparatus to a contiguous lidstock (26) to form a set of packages, said apparatus comprising:
a lidstock manoeuvring system for placing the contiguous lidstock (26) over said plurality of said containers (24) located adjacent to one another; and
a mandrel (32);
wherein said lidstock (26) has a thickness and said container (24) has a thickness, and further wherein said mandrel (32) is selectively moveable between a retracted upper position and an engaged lower position to seal said lidstock (26) to said containers (24), and wherein the mandrel (32) is adapted to apply pressure to said contiguous lidstock (26) and said flanges (39) of said containers (24) to adhere said contiguous lidstock (26) to said plurality of said containers to form a set of packages;
**characterised in that** the apparatus further comprises:
a plurality of lifts (18);
a plurality of platens (16) located in a lower portion of the apparatus, each of said platens (16) comprising a compliant head that is compliant in more than one direction, each of said platens (16) adjacent to one another, each of said platens (16) being individually supported by one of said lifts (18);
a plurality of discrete carriers (14), said carriers (14) being movable within said apparatus onto said plurality of said platens (16), such that each of said carriers (14) is mounted on a respective one of said platens (16), a single one of said containers (24) being mounted on a single one of said carriers (14) to provide a plurality of said containers (24) located adjacent to one another;
and wherein the mandrel (32) is disposed above said plurility of platens (16); and
wherein in said lower position, a pressure applied by said mandrel (32) against each of said platens (16) is adapted to be maintained within a predetermined range by the respective lifts (18), thereby compensating for tolerance differences in the thickness of said containers (24) and the thickness of said lidstock (26) to ensure that an adequate seal is formed between said lidstock (26) and each of said containers (24).

2. The apparatus according to claim 1, wherein each carrier (14) has a cavity, each said recess (25) of said container (24) being received in said cavity of said carrier (14).

3. The apparatus of claim 1, wherein said lidstock (26) comprises print, and further wherein said lidstock manoeuvring system further comprises:
a vision alignment inspection system having means for checking the print quality on said lidstock (26) and for simultaneously checking for registration of said lidstock (26) within said apparatus based on the location of said print.

4. The apparatus of claim 1, wherein said lidstock (26) is held in position by said lidstock manoeuvring system over said containers (24) until said mandrel (32) contacts said lidstock (26) in said engaged lower position.

5. The apparatus of claim 1, wherein said apparatus further comprises:
said mandrel (32) further comprising a plurality of dies each having a die cylinder;
said dies disposed above each of said carriers(14);
wherein said cylinders apply pressure, within a predetermined range, to each of said dies.

6. An apparatus for packaging contact lenses in a plurality of contact lens containers, each container (24) having a recess (25), a sealing flange (39) about said recess (25), and a contact lens within said recess (25), a plurality of said containers (24) being sealed in said apparatus to a contiguous lidstock (26) to form a set of packages, said apparatus comprising:
a platen (16) in a lower portion of the apparatus, said platen (16) comprising a compliant head that is compliant in more than one direction, said platen (16) capable of supporting a plurality of carriers (14);
a plurality of discrete carriers (14), said carriers (14) being movable within said apparatus onto said platen (16) so that said carriers (14) are located adjacent to one another; and
a lidstock manoeuvring system for placing lidstock (26) over a plurality of said containers (24); and wherein said lidstock (26) has a thickness and said container (24) has a thickness;
**characterised by**:
a plurality of lifts (18);
a plurality of mandrels (32) disposed above said platen (16); each of said mandrels (32) being individually supported by one of said lifts (18) and such that each of said carriers (14) is located below each of said mandrels (32);
whereby pressure can be applied to said lidstock (26) and said flange (39) of each said container (24) by said mandrels (32) and said platen (16) to adhere said lidstock (26) to said containers (24);
and further wherein said mandrels (32) are selectively moveable between a retracted upper position and an engaged lower position to seal said lidstock (26) to said containers (24), and wherein in said lower position, a pressure applied by said mandrels (32) against said platen (16) is adapted to be maintained within a predetermined range by the respective lifts (18), thereby compensating for tolerance differences in the thickness of said containers (24) and the thickness of said lidstock (26) to ensure that an adequate seal is formed between said lidstock (26) and each of said containers (24).

7. The apparatus according to claim 1 or claim 6, further comprising a pressure transducer being connected to said lifts (18), and further wherein said lifts (18) apply pressure to said containers (24) within a predetermined range, as determined by said pressure transducer.

8. The apparatus according to claim 1 or claim 6, wherein said mandrel (32) is heated.

9. The apparatus of claim 6, wherein said lidstock manoeuvring system further comprises:
a vision alignment inspection system having means for checking the print quality on said lidstock (26) and for simultaneously checking for registration of said lidstock (26) within said apparatus based on the location of said print.

10. The apparatus of claim 3 or claim 9, wherein said lidstock manoeuvring system further comprises a printing system and a cutting system, wherein said lidstock (26) is fed from a roll under tension into said printing system and said cutting system, and said vision alignment inspection system is located after said printing system.

11. The apparatus of claim 3 or claim 9, wherein said lidstock manoeuvring system further comprises a printing system and a cutting system, wherein said lidstock is fed from a roll under tension into said printing system and said cutting system and said alignment inspection system is located between said printing system and said cutting system.

12. The apparatus of claim 3 or claim 9, further comprising a heat seal apparatus, wherein said lidstock (26) is mechanically controlled after said vision alignment inspection system to prevent misregistration of said lidstock in said heat seal apparatus.

13. The apparatus of claim 10, wherein said cutting system is located after said printing system.

14. The apparatus of claim 6, wherein said lidstock (26) is held in position by said lidstock manoeuvring system between said mandrels (32) and said platen (16) until a mandrel (32) contacts said lidstock (26).

15. The apparatus according to claim 1 or claim 6, wherein said compliant head is compliant in the vertical and horizontal directions.

16. The apparatus according to claim 1 or claim 6, wherein said compliant head is compliant in the pitch and yaw directions.

17. The apparatus according to claim 1 or claim 6, wherein each of said platens (16) comprises a heat seal die, said heat seal die comprises a wafer heater capable of increasing the temperature of the heat seal die with a lag time of less than 1 second.

18. The apparatus of claim 1 or claim 6, wherein said mandrel (32) comprises a heat seal die block comprising a heat seal die, and wherein the heat seal die comprises extra thermal mass in the area of the heat seal die that contacts the lidstock (26) where there is a greater amount of foil in contact with said sealing flange (39).

## Patentansprüche

1. Vorrichtung zum Verpacken von Kontaktlinsen in einer Vielzahl von Kontaktlinsenbehältem (24), wobei jeder Behälter (24) eine Ausnehmung (25), einen Dichtflansch (39) um die Ausnehmung (25) und eine Kontaktlinse innerhalb der Ausnehmung (25) hat, wobei eine Vielzahl der Behälter (24) in der Vorrichtung an ein zusammenhängendes Deckelmaterial (26) gesiegelt wird, um einen Satz Verpackungen zu bilden, wobei die Vorrichtung aufweist:
ein Deckelmaterial-Manövriersystem zum Bringen des zusammenhängenden Deckelmaterials (26) über die Vielzahl der Behälter (24), die nebeneinander angeordnet sind; und
einen Stempel (32);
wobei das Deckelmaterial (26) eine Dicke hat und der Behälter (24) eine Dicke hat und wobei weiter der Stempel (32) wahlweise zwischen einer zurückgezogenen oberen Position und einer unteren Anlageposition bewegbar ist, um das Deckelmaterial (26) an die Behälter (24) zu siegeln und wobei der Stempel (32) dazu ausgelegt ist, Druck auf das zusammenhängende Deckelmaterial (26) und die Flansche (39) des Behälters (24) aufzugeben, um das zusammenhängende Deckelmaterial (26) an die Vielzahl der Behälter anzuhaften, um einen Satz Verpackungen zu bilden;
**dadurch gekennzeichnet, daß** die Vorrichtung weiter aufweist:
eine Vielzahl von Hebeeinrichtungen (18);
eine Vielzahl von Auflageplatten (16), die sich in einem unteren Bereich der Vorrichtung befinden, wobei jede der Auflageplatten (16) einen nachgiebigen Kopf aufweist, der in mehr als einer Richtung nachgiebig ist, wobei jede der Auflageplatten (16) an eine andere angrenzt, wobei jede der Auflageplatten (16) einzeln von einer der Hebeeinrichtungen (18) getragen wird,
eine Vielzahl von einzelnen Trägem (14), wobei die Träger (14) innerhalb der Vorrichtung auf der Vielzahl der Auflageplatten (16) derart bewegbar sind, daß jeder der Träger (14) auf einer jeweiligen der Auflageplatten (16) angeordnet ist, wobei ein einzelner Behälter (24) auf einem einzelnen Träger (14) angeordnet ist, um eine Vielzahl der Behälter (24) zu bilden, die aneinander angrenzend angeordnet sind;
und wobei der Stempel (32) oberhalb der Vielzahl der Auflageplatten (16) angeordnet ist; und
wobei in der unteren Position ein Druck, der von dem Stempel (32) gegen jede der Auflageplatten (16) ausgeübt wird, durch die jeweiligen Hebeeinrichtungen (18) so angepaßt wird, daß er innerhalb eines vorbestimmten Bereiches gehalten wird, so daß Toleranzunterschiede in der Dicke der Behälter (26) und der Dicke des Deckelmaterials (26) kompensiert werden, um sicherzustellen, daß eine ausreichende Versiegelung zwischen dem Deckelmaterial (26) und jedem der Behälter (24) gebildet wird.

2. Vorrichtung nach Anspruch 1, bei der jeder Träger (14) einen Hohlraum hat, wobei jede Ausnehmung (25) des Behälters (24) in dem Hohlraum des Trägers (14) aufgenommen wird.

3. Vorrichtung nach Anspruch 1, bei der das Deckelmaterial (26) einen Aufdruck aufweist und bei der das Deckelmaterial-Manövriersystem weiter aufweist:
ein Sicht-Ausrichtungsprüfsystem mit einer Einrichtung zum Überprüfen der Druckqualität auf dem Deckelmaterial (26) und zum gleichzeitigen Prüfen auf Ausrichtung des Deckelmaterials (26) innerhalb der Vorrichtung basierend auf dem Ort des Aufdruckes.

4. Vorrichtung nach Anspruch 1, bei dem das Deckelmaterial (26) von dem Deckelmaterial-Manövriersystem in seiner Position über den Behältern (24) gehalten wird, bis der Stempel (32) das Deckelmaterial (26) in der unteren Anlageposition berührt.

5. Vorrichtung nach Anspruch 1, wobei die Vorrichtung weiter aufweist:
der Stempel (32) weist weiterhin eine Vielzahl von Matrizen auf, die jede einen Matrizenzylinder haben;
wobei die Matrizen oberhalb jedem der Träger (14) angeordnet sind;
wobei die Zylinder innerhalb eines vorbestimmten Bereiches Druck auf jede der Matrizen ausüben.

6. Vorrichtung zum Verpacken von Kontaktlinsen in einer Vielzahl von Kontaktlinsenbehältern, wobei jeder Behälter (24) eine Ausnehmung (25), einen Dichtflansch (39) um die Ausnehmung (25) und eine Kontaktlinse innerhalb der Ausnehmung (25) hat, wobei eine Vielzahl der Behälter (24) in der Vorrichtung an ein zusammenhängendes Deckelmaterial (26) gesiegelt wird, um einen Satz Verpackungen zu bilden, wobei die Vorrichtung aufweist:
eine Auflageplatte (16) in einem unteren Bereich der Vorrichtung, wobei die Auflageplatte (16) einen nachgiebigen Kopf aufweist, der in mehr als einer Richtung nachgiebig ist, wobei die Auflageplatte (16) in der Lage ist, eine Vielzahl von Trägem (14) zu halten,
eine Vielzahl einzelner Träger (14), wobei die Träger (14) innerhalb der Vorrichtung auf der Auflageplatte (16) bewegbar sind, so daß die Träger (14) aneinander angrenzend angeordnet werden; und
ein Deckelmaterial-Manövriersystem zum Bringen des Deckelmaterials (26) über eine Vielzahl der Behälter (24); und wobei das Deckelmaterial (26) eine Dicke hat und der Behälter (24) eine Dicke hat;
**gekennzeichnet durch**:
eine Vielzahl von Hebeinrichtungen (18);
eine Vielzahl von Stempeln (32), die oberhalb der Auflageplatte (16) angeordnet sind, wobei jeder der Stempel (32) einzeln von einer der Hebeeinrichtungen (18) gehalten wird und derart, daß jeder der Träger (14) sich unterhalb jedem der Stempel (32) befindet;
wodurch mit den Stempeln (32) und der Auflageplatte (16) Druck auf das Deckelmaterial (26) und den Flansch (39) jedes Behälters (24) ausgeübt werden kann, um das Deckelmaterial (26) an die Behälter (24) anzuhaften;
und wobei weiter die Stempel (32) wahlweise zwischen einer zurückgezogenen oberen Position und einer unteren Anlageposition bewegbar sind, um das Deckelmaterial (26) mit den Behältern (24) zu versiegeln, und wobei in der unteren Position ein Druck, der von den Stempeln (32) gegen die Auflageplatte (16) ausgeübt wird, von den jeweiligen Hebeeinrichtungen (18) so angepaßt wird, daß er innerhalb eines vorbestimmten Bereiches gehalten wird, so daß Toleranzdifferenzen in der Dicke der Behälter (24) und der Dicke des Deckelmaterials (26) kompensiert werden, um sicherzustellen, daß eine ausreichende Versiegelung zwischen dem Deckelmaterial (26) und jedem der Behälter (24) gebildet wird.

7. Vorrichtung nach Anspruch 1 oder Anspruch 6, weiter mit einem Druck-Transducer, der mit den Hebeeinrichtungen (18) verbunden ist, und bei der weiter die Hebeeinrichtungen (18) Druck auf die Behälter (24) innerhalb eines vorbestimmten Bereiches, wie er von dem Druck-Transducer bestimmt wird, ausüben.

8. Vorrichtung nach Anspruch 1 oder Anspruch 6, bei der der Stempel (32) beheizt ist.

9. Vorrichtung nach Anspruch 6, bei der das Deckelmaterial-Manövriersystem weiter aufweist:
ein Sicht-Ausrichtungsprüfsystem mit einer Einrichtung zum Prüfen der Qualität eines Auf druckes auf dem Deckelmaterial (26) und zum gleichzeitigen Prüfen der Ausrichtung des Deckelmaterials (26) innerhalb der Vorrichtung basierend auf dem Ort des Aufdruckes.

10. Vorrichtung nach Anspruch 3 oder Anspruch 9, bei der das Deckelmaterial-Manövriersystem weiter ein Drucksystem und ein Schneidesystem aufweist, wobei das Dekkelmaterial (26) von einer Walze unter Spannung in das Drucksystem und das Schneidesystem eingespeist wird und das Sicht-Ausrichtungsprüfsystem sich hinter dem Drucksystem befindet.

11. Vorrichtung nach Anspruch 3 oder Anspruch 9, bei der das Deckelmaterial-Manövriersystem weiter ein Drucksystem und ein Schneidesystem aufweist, wobei das Dekkelmaterial von einer Walze unter Spannung in das Drucksystem und in das Schneidesystem gespeist wird, und sich das Ausrichtungsprüfsystem zwischen dem Drucksystem und dem Schneidesystem befindet.

12. Vorrichtung nach Anspruch 3 oder Anspruch 9, weiter mit einer Heißsiegelvorrichtung, wobei das Deckelmaterial (26) hinter dem Sicht-Ausrichtungsprüfsystem mechanisch kontrolliert wird, um Fehlausrichtung des Deckelmaterials in der Heißsiegelvorrichtung zu vermeiden.

13. Vorrichtung nach Anspruch 10, bei dem sich das Schneidesystem hinter dem Drucksystem befindet.

14. Vorrichtung nach Anspruch 6, bei dem das Deckelmaterial (26) von dem Deckelmaterial-Manövriersystem zwischen den Stempeln (32) und der Auflageplatte (16) in Position gehalten wird, bis ein Stempel (32) das Deckelmaterial (26) berührt.

15. Vorrichtung nach Anspruch 1 oder Anspruch 6, bei der der nachgiebige Kopf in der vertikalen und der horizontalen Richtung nachgiebig ist.

16. Vorrichtung nach Anspruch 1 oder Anspruch 6, bei der der nachgiebige Kopf in der Richtung des Nickens und des Gierens nachgiebig ist.

17. Vorrichtung nach Anspruch 1 oder Anspruch 6, bei der jede der Auflageplatten (16) eine Heißsiegelmatrize aufweist, wobei die Heißsiegelmatrize einen Wafer-Heizer aufweist, der in der Lage ist, die Temperatur der Heißsiegelmatrize mit einer Verzögerungszeit von weniger als 1 Sekunde zu erhöhen.

18. Vorrichtung nach Anspruch 1 oder Anspruch 6, bei der der Stempel (32) einen Heißsiegel-Matrizenblock aufweist, der eine Heißsiegelmatrize aufweist, und bei der die Heißsiegelmatrize zusätzliche thermische Masse in dem Bereich der Heißsiegelmatrize, der das Dekkelmaterial (26) berührt, aufweist, da dort eine größere Menge an Folie in Kontakt mit dem Dichtflansch (39) ist.

## Revendications

1. Appareil pour emballer des lentilles de contact dans une pluralité de récipients pour lentilles de contact (24), chaque récipient (24) ayant un évidement (25), un rebord d'étanchéité (39) autour dudit évidement (25), et une lentille de contact à l'intérieur dudit évidement (25), une pluralité desdits récipients (24) étant hermétiquement fermés dans ledit appareil par un matériau d'operculage contigu (26) pour former un ensemble d' emballage, ledit appareil comprenant :
■ un système de manoeuvre de matériau d'operculage pour placer le matériau d'operculage contigu (26) sur ladite pluralité desdits récipients (24) positionnés les uns adjacents aux autres ; et
■ un mandrin (32) ;
dans lequel ledit matériau d'operculage (26) a une épaisseur et ledit récipient (24) a une épaisseur, et en outre, dans lequel ledit mandrin (32) est sélectivement mobile entre une position supérieure réfractée et une position inférieure engagée pour fermer hermétiquement ledit matériau d'operculage (26) sur lesdits récipients (24), et dans lequel le mandrin (32) est adapté pour appliquer une pression sur ledit matériau d'operculage contigu (26) et lesdits rebords (39) desdits récipients (24) pour faire adhérer ledit matériau d'operculage contigu (26) sur ladite pluralité desdits récipients pour former un ensemble d'emballage ;
**caractérisé en ce que** l'appareil comprend en outre :
■ une pluralité d'élévateurs (18) ;
■ une pluralité de plateaux (16) situés dans une position inférieure de l'appareil, chacun desdits plateaux (16) comprenant une tête souple qui est souple dans plus d'une direction, chacun desdits plateaux (16) étant adjacent les uns par rapport aux autres, chacun desdits plateaux (16) étant individuellement supporté par l'un desdits élévateurs (18) ;
■ une pluralité de supports distincts (14), lesdits supports (14) étant mobiles dans ledit appareil sur ladite pluralité desdits plateaux (16), de sorte que chacun desdits supports (14) est monté sur un plateau respectif desdits plateaux (16), un seul desdits récipients (24) étant monté sur un seul desdits supports (14) pour fournir une pluralité desdits récipients (24) positionnés les uns adjacents aux autres;
■ et dans lequel le mandrin (32) est disposé au-dessus de ladite pluralité de plateaux (16) ; et
■ dans lequel dans ladite position inférieure, une pression appliquée par ledit mandrin (32) contre chacun desdits plateaux (16) est adaptée pour être maintenue dans une plage prédéterminée par les élévateurs (18) respectifs, compensant ainsi les différences de tolérance de l'épaisseur desdits récipients (24) et de l'épaisseur dudit matériau d'operculage (26) pour garantir qu'un joint d'étanchéité adéquat est formé entre ledit matériau d'operculage (26) et chacun desdits récipients (24).

2. Appareil selon la revendication 1, dans lequel chaque support (14) a une cavité, chacun desdits évidements (25) dudit récipient (24) étant reçu dans ladite cavité dudit support (14).

3. Appareil selon la revendication 1, dans lequel ledit matériau d'operculage (26) comprend une impression, et en outre dans lequel ledit système 52 de manoeuvre de matériau d'operculage comprend en outre :
■ un système de contrôle d'alignement de vision ayant des moyens pour vérifier la qualité d'impression dudit matériau d'operculage (26) et pour vérifier simultanément l'alignement dudit matériau d'operculage (26) à l'intérieur dudit appareil en fonction du positionnement de ladite impression.

4. Appareil selon la revendication 1, dans lequel ledit matériau d'operculage (26) est maintenu en position par ledit système de manoeuvre de matériau d'operculage sur lesdits récipients (24) jusqu'à ce que ledit mandrin (32) est en contact avec ledit matériau d'operculage (26) dans ladite position inférieure engagée.

5. Appareil selon la revendication 1, dans lequel ledit appareil comprend en outre :
■ ledit mandrin (32) qui comprend en outre une pluralité de moules ayant chacun un cylindre de moule;
■ lesdits moules étant disposés au-dessus de chacun desdits supports (14) ;
dans lequel lesdits cylindres appliquent de la pression, dans une plage déterminée, sur chacun desdits moules.

6. Appareil pour emballer des lentilles de contact dans une pluralité de récipients de lentilles de contact, chaque récipient (24) ayant un évidement (25), un rebord d'étanchéité (39) autour dudit évidement (25), et une lentille de contact dans ledit évidement (25), une pluralité desdits récipients (24) étant hermétiquement fermés dans ledit appareil avec un matériau d'operculage contigu (26) pour former un ensemble d'emballage, ledit appareil comprenant :
■ un plateau (16) dans une partie inférieure de l'appareil, ledit plateau (16) comprenant une tête souple qui est souple dans plus d'une direction, ledit plateau (16) étant capable de supporter une pluralité de supports (14) ;
■ une pluralité de supports distincts (14), lesdits supports (14) étant mobiles dans ledit appareil sur ledit plateau (16) de sorte que lesdits plateaux (14) sont positionnés les uns adjacents aux autres ; et
■ un système de manoeuvre de matériau d'operculage pour placer le matériau d'operculage (26) sur une pluralité desdits récipients (24) ; et dans lequel ledit matériau d'operculage (26) a une épaisseur et ledit récipient (24) a une épaisseur ;
**caractérisé par** :
■ une pluralité d'élévateurs (18) ;
■ une pluralité de mandrins (32) disposés au-dessus dudit plateau (16) ; chacun desdits mandrins (32) étant supporté de manière individuelle par l'un desdits élévateurs (18) et de sorte que chacun desdits supports (14) est positionné au-dessous de chacun desdits mandrins (32) ;
■ moyennant quoi la pression peut être appliquée sur ledit matériau d'operculage (26) et ledit rebord (39) pour chacun desdits récipients (24) par lesdits mandrins (32) et ledit plateau (16) pour faire adhérer ledit matériau d'operculage (26) sur lesdits récipients (24) ;
■ et en outre dans lequel lesdits mandrins (32) sont sélectivement mobiles entre une position supérieure rétractée et une position inférieure engagée pour fermer hermétiquement ledit matériau d'operculage (26) sur lesdits récipients (24), et dans lequel dans ladite position inférieure, une pression appliquée par lesdits mandrins (32) contre ledit plateau (16) est adaptée pour être maintenue dans une plage prédéterminée par les élévateurs (18) respectifs, compensant ainsi les différences de tolérance de l'épaisseur desdits récipients (24) et de l'épaisseur dudit matériau d'operculage (26) pour garantir qu'un joint d'étanchéité adéquat est formé entre ledit matériau d'operculage (26) et chacun desdits récipients (24).

7. Appareil selon la revendication 1 ou la revendication 6, comprenant en outre un capteur de pression qui est raccordé auxdits élévateurs (18), et en outre dans lequel lesdits élévateurs (18) appliquent de la pression sur lesdits récipients (24) dans une plage prédéterminée, telle que déterminée par ledit capteur de pression.

8. Appareil selon la revendication 1 ou la revendication 6, dans lequel ledit mandrin (32) est chauffé.

9. Appareil selon la revendication 6, dans lequel ledit système de manoeuvre de matériau d'operculage comprend en outre :
■ un dispositif de contrôle d'alignement de vision ayant des moyens pour vérifier la qualité d'impression sur ledit matériau d'operculage (26) et pour vérifier simultanément l'alignement dudit matériau d'operculage (26) dans ledit appareil basé sur le positionnement de ladite impression.

10. Appareil selon la revendication 3 ou la revendication 9, dans lequel ledit système de manoeuvre de matériau d'operculage comprend en outre un système d'impression et un système de coupe, dans lequel ledit matériau d'operculage (26) est alimenté à partir d'un rouleau sous tension dans ledit système d'impression et ledit système de coupe, et ledit système de contrôle d'alignement de vision est positionné après ledit système d'impression.

11. Appareil selon la revendication 3 ou la revendication 9, dans lequel ledit système de manoeuvre de matériau d'operculage comprend en outre un système d'impression et un système de coupe, dans lequel ledit matériau d'operculage est alimenté à partir d'un rouleau sous tension dans ledit système d'impression et ledit système de coupe, et ledit système de contrôle d'alignement est positionné entre ledit système d'impression et ledit système de coupe.

12. Appareil selon la revendication 3 ou la revendication 9, comprenant en outre un appareil de thermosoudage dans lequel ledit matériau d'operculage (26) est contrôlé mécaniquement après ledit système de contrôle d'alignement de vision pour empêcher le désalignement dudit matériau d'operculage dans ledit appareil de thermosoudage.

13. Appareil selon la revendication 10, dans lequel ledit système de coupe est positionné après ledit système d'impression.

14. Appareil selon la revendication 6, dans lequel ledit matériau d'operculage (26) est maintenu en position par ledit système de manoeuvre de matériau d'operculage entré lesdits mandrins (32) et ledit plateau (16) jusqu'à ce qu'un mandrin (32) est en contact avec ledit matériau d'operculage (26).

15. Appareil selon la revendication 1 ou la revendication 6, dans lequel ladite tête souple est souple dans les directions verticale et horizontale.

16. Appareil selon la revendication 1 ou la revendication 6, dans lequel ladite tête souple est souple dans les directions de l'écartement et du lacet.

17. Appareil selon la revendication 1 ou la revendication 6, dans lequel chacun desdits plateaux (16) comprend un moule de thermosoudage, ledit moule de thermosoudage comprenant un dispositif de chauffage à plaquette capable d'augmenter la température du moule de thermosoudage avec un temps mort inférieur à une seconde.

18. Appareil selon les revendications 1 ou 6, dans lequel ledit mandrin (32) comprend un bloc de moule de thermosoudage comprenant un moule de thermosoudage, et dans lequel le moule de thermosoudage comprend une masse thermique supplémentaire dans la zone du moule de thermosoudage qui est en contact avec le matériau d'operculage (26) où on trouve une plus grande quantité de feuilles en contact avec ledit rebord d'étanchéité (39).
